# EUROPEAN PATENT SPECIFICATION

(11) **EP 2 601 779 B1**
(45) Date of publication and mention of the grant of the patent: **22.03.2017**
(21) Application number: 11740789.0
(22) Date of filing: 27.07.2011
(51) Int. Cl.: H04M 1/725

(54) **METHOD, DEVICES, AND SYSTEM FOR DELAYED USAGE OF IDENTIFIED CONTENT**
VERFAHREN, VORRICHTUNGEN UND SYSTEM FÜR VERZÖGERTE NUTZUNG VON IDENTIFIZIERTEM INHALT
PROCÉDÉ, DISPOSITIFS ET SYSTÈME POUR UNE UTILISATION RETARDÉE D'UN CONTENU IDENTIFIÉ

(30) Priority: 04.08.2010 US 850514
(43) Date of publication of application: 12.06.2013
(73) Proprietor: Google Technology Holdings LLC, Mountain View, CA 94043 (US)
(72) Inventor: ALBERTH, William, P., Jr., Prairie Grove, Illinois 60012 (US); HEDE, William, Lake in the Hills Illinois 60156 (US)
(74) Representative: Boult Wade Tennant
(86) International application number: PCT/US2011/045612
(87) International publication number: WO 2012/018661

(56) References cited:
- EP-A1- 1 223 728
- EP-A1- 1 571 810
- EP-A2- 1 267 314
- EP-A2- 1 467 543
- US-A1- 2007 112 929
- US-A1- 2008 082 651
- US-A1- 2009 224 867

## Description

### CROSS REFERENCE TO PRIOR APPLICATIONS

This application is related by a common assignee to U.S. application Ser. No. 12/342,442, (US patent no. US 8,190,213) filed December 23, 2008.

### BACKGROUND

### TECHNICAL FIELD

This invention relates generally to applications for portable electronic devices, and more particularly to a method and apparatus for delaying usage of identified content.

### BACKGROUND ART

The use of portable communication devices, such as mobile telephones, "smart" devices, and personal digital assistants, is becoming more and more prevalent. People today use these devices not only for communication, but also to maintain to-do lists, surf the Internet, maintain personal and business calendars, and to stay up-to-date with friends, family, and co-workers.

As the capabilities of these devices increases, so does the tendency for users to "multi-task." Multi-tasking is often seen as a requirement in modern society. With ever increasing demands for a person's time, it seems today that unless multiple tasks are being performed simultaneously, there is simply not enough time in the day to get everything done. Consequently, people are often doing two things at once. When trying to complete two tasks simultaneously, it is easy to focus on completing one task while forgetting to complete the other. For example, a person may be engrossed in a new article they are reading on a website when they are called to a meeting. While the person would like to continue reading the article, time simply does not permit it. It is possible that after the meeting the person may forget about the article. At a later time, when they recall the article, they may be unable to find it again.

European patent application publication no. EP 1467543 describes a user interface for restricting mobile communications in a vehicle. The user interface has a restricted mode in which the functionality of a radio interface is limited to wireless connection to a radio communications network. In restricted mode the user interface indicates operation with limited functionality to the caller when a call occurs, provides several communicates functions for selection by the caller and activates the selected function.

US patent application publication no. US 2009/224867 describes a data processing apparatus comprising a sensor and a context engine module. The sensor is configured to generate a sensor output signal representative of a value for one or more context aspects of the data processing apparatus and a confidence factor associated with each of the values for the one or more context aspects. The context engine module is configured to process the sensor output signal to generate and make available a final value for one or more context aspects of the data processing apparatus.

EP patent application publication no. EP 1223728 describes a controlling call signaling method. The method involves feeding ambient noise to a voice recognition circuit and suppressing a call signal if a speech signal is detected.

EP patent application publication no. EP 1267314 discloses an electronic system that has (i) an information outputting apparatus having an output device for outputting a content information including at least one of an audio information and a video information and (ii) a navigation apparatus having an input device for inputting a destination in a movement of a movable body and a calculate device for calculating a necessary time length required for the movable body to arrive at the destination.

EP patent application publication no. EP 1571810 discloses a communications system that includes at least one mobile wireless communications device, and a wireless communications network for sending text messages thereto. The at least one mobile wireless communications device may include a wireless transceiver and a controller for cooperating therewith for receiving text messages from the wireless communications network. It may further include a headset output connected to the controller. The controller may be for switching between a normal message mode and an audio message mode based upon a connection between the headset output and a headset.

US patent application publication no. US 2008/082651 describes an apparatus for providing a task reminder which includes a monitoring module configured to monitor a location of a user via a mobile communication device associated with the user at predetermined time intervals for tracking historical travel information of the user and a data store for storing the historical travel information and for storing user specified task information that includes a task and a task location. In an exemplary embodiment, the apparatus includes a reminder module configured to calculate a novelty rating of a region that includes the task location and a current position of the user based on the user's historical travel information. The novelty rating is related to a historical presence of the user in the region. The apparatus also includes a message module configured to generate a reminder of the task based on the novelty rating of the region and a distance between the task location and the current position of the user.

US patent application publication no. US 2007/112929 describes a method for providing a notification of lateness regarding an appointment entered in a calendar. This notification is sent from a first appointment participant to at least one other appointment participant. The notification occurs when the first appointment participant receives a first appointment reminder for the appointment entered in the calendar, and then requests a later second appointment reminder. In that event, the calendar of the first appointment participant is automatically checked to identify the at least one other appointment participant, and the notification signal is automatically transmitted to the at least one other appointment participant, indicative of the lateness. Later, the second appointment reminder is sent to the first appointment participant.

There is thus a need for an improved method and apparatus for delaying the usage of content for later use.

### SUMMARY

In accordance with the present invention, there is provided a method and a portable electronic device as recited in the accompanying claims.

### BRIEF DESCRIPTION OF THE DRAWINGS

FIG. 1 illustrates one illustrative embodiment of a method and apparatus configured in accordance with embodiments of the invention, which is shown as a use case example.
FIG. 2 illustrates one embodiment of an apparatus configured in accordance with embodiments of the invention.
FIG. 3 illustrates one method of delaying usage of content in accordance with embodiments of the invention.
FIGS. 4-9 illustrate one illustrative apparatus configured in accordance with embodiments of the invention executing methods in accordance with one embodiment of the invention.
FIG. 10 illustrates some illustrative alternative modes of presenting content with delayed usage in accordance with embodiments of the invention.

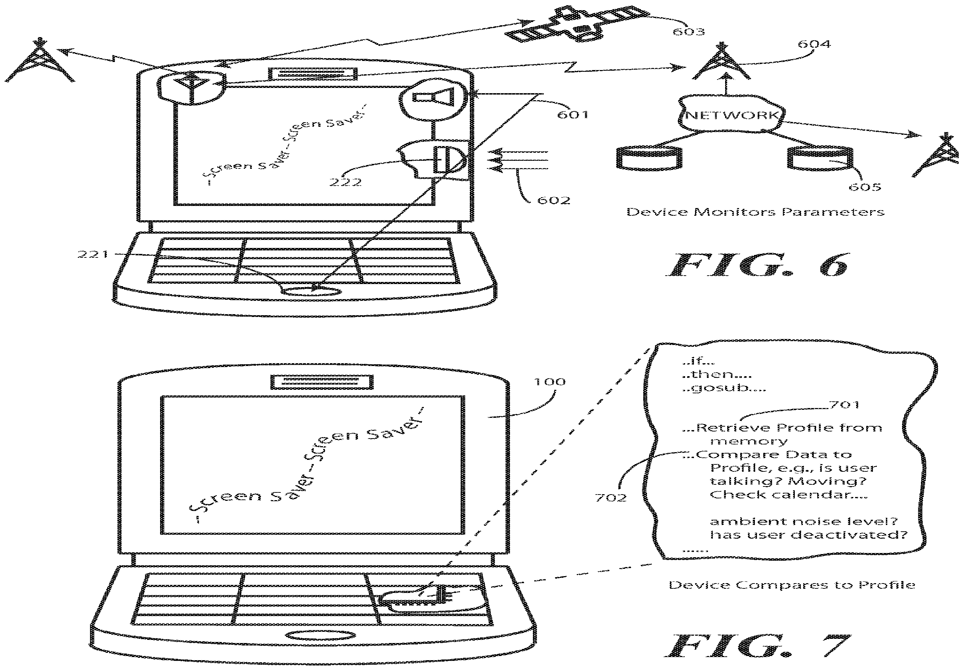

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention. Further, devices may be shown in configurations for illustrative purposes that vary from the actual configuration. For instance, the device of FIG. 6 is shown as being a flip device in the open position, while in practice it may be in the closed configuration.

### DETAILED DESCRIPTION OF THE INVENTION

Before describing in detail embodiments that are in accordance with the present invention, it should be observed that the embodiments reside primarily in combinations of method steps and apparatus components related to marking content for delayed usage and presenting the marked content, or updated content, at a later time. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

It will be appreciated that embodiments of the invention described herein may be comprised of one or more conventional processors and unique stored program instructions that control the one or more processors to implement, in conjunction with certain non-processor circuits, some, most, or all of the functions of receiving indications of content to be used later, storing pointers or other references to that content, monitoring device parameters for a time suitable for presentation of the content, and the corresponding later presentation of content as described herein. The non-processor circuits may include, but are not limited to, a radio receiver, a radio transmitter, signal drivers, clock circuits, power source circuits, and user input devices. As such, these functions may be interpreted as steps of a method to perform a method delaying the usage of content until a later time determined by an evaluation of device conditions. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

Embodiments of the invention are now described in detail. Referring to the drawings, like numbers indicate like parts throughout the views. As used in the description herein and throughout the claims, the following terms take the meanings explicitly associated herein, unless the context clearly dictates otherwise: the meaning of "a," "an," and "the" includes plural reference, the meaning of "in" includes "in" and "on." Relational terms such as first and second, top and bottom, and the like may be used solely to distinguish one entity or action from another entity or action without necessarily requiring or implying any actual such relationship or order between such entities or actions. Also, reference designators shown herein in parenthesis indicate components shown in a figure other than the one in discussion. For example, talking about a device (10) while discussing figure A would refer to an element, 10, shown in figure other than figure A.

Embodiments of the present invention permit a user to mark identified content in a portable electronic device to be consumed later. For example, a person may be surfing the Internet and may run across a website that they are interested in reading. Alternatively, a friend may send an email that the user is interested in reading. However, for any of a variety of reasons, the user does not have time to consume the content at the present time. Embodiments of the invention allow the user to designate that content to be "used later." In one embodiment, the portable electronic device will then monitor device parameters that are indicative of the user's environment or activities. The portable electronic device can then determine an evaluative availability of the user and may present the marked content at that time.

The user may mark the content, or sub-portions of the content, for later usage through a user interface. In one embodiment, the user may make a swiping motion across a touch sensitive user interface. In another embodiment, the user employs a pull-down or pop-up menu to mark the content for later use. Modules operating in conjunction with one or more processors understand this finger gesture or menu actuation to mean "content marked for later use." Accordingly, the modules and one or more processors may store a pointer, indicator, marker, or alternatively the content itself, in a queue in memory.

The modules and one or more processors of the device then monitor device parameters to evaluate what the user is doing. For example, the modules and one or more processors may monitor a microphone for an environmental noise level. The modules and processors may monitor an on-board camera to determine if the device is in a low-light environment such as a pocket. Other monitored devices include a global positioning system (GPS) sensor, accelerometers, gyroscopes, or other motion sensors, applications such as calendaring applications, and so forth. By monitoring these devices, the portable electronic device is able to piece together clues as to whether the user is available.

In one embodiment, the portable electronic device determines that the user is available by comparing data received from the devices and applications with a predetermined availability profile stored in memory. This comparison can be incorporated into a contextually aware module operating within the portable electronic device.

By way of example, the modules and processors may consult a calendaring application to detect an upcoming event. The modules and processors may then consult a navigational application, accelerometer, or GPS sensor to determine the user's location and whether the user is moving. The modules and processors may then be configured to conclude that the user is traveling to the event detected in the calendaring application. The modules and processors may then detect a large level of ambient noise, but an absence of the user's voice, through a microphone. The combination of these data, when compared to an availability profile, can indicate that the user is on a train traveling to a meeting, but is not talking on the phone. Accordingly, the portable electronic device may conclude that an evaluative availability state is present.

Concluding that the user is available, the portable electronic device can select a marked item from the queue in memory and present it to the user. In one embodiment, the modules and processors can be configured to check for updates prior to presenting the content. Prioritization can accompany the selection process. For instance, in one embodiment, the portable electronic device may estimate how much time will be available during the evaluative availability state, such as by knowing where the user is going and estimating an arrival time. Accordingly, the portable electronic device may be configured to select an item from the queue that can be presented, or for which the presentation time will last, for the estimated amount of available time.

The content can be presented in a variety of ways. For example, in one embodiment, suitable for the "on the train" example above, the portable electronic device can be configured to read the content to the user via a text-to-voice application. In another embodiment, the portable electronic device can simply be configured to present the content on a display. In yet another embodiment, the portable electronic device can be configured to deliver the content to another device, such as a portable computer, television, or radio in communication with the portable electronic device.

Embodiments of the present invention can be configured to suit particular applications as well. For example, it is often the case that on-line content, such as that viewed via websites, includes advertising. Where this is the case, embodiments of the present invention can be configured not only to deliver the content, but the advertising as well. An advertisement can be delivered, for instance, partway through the content. Once the content is presented it can be removed from the queue.

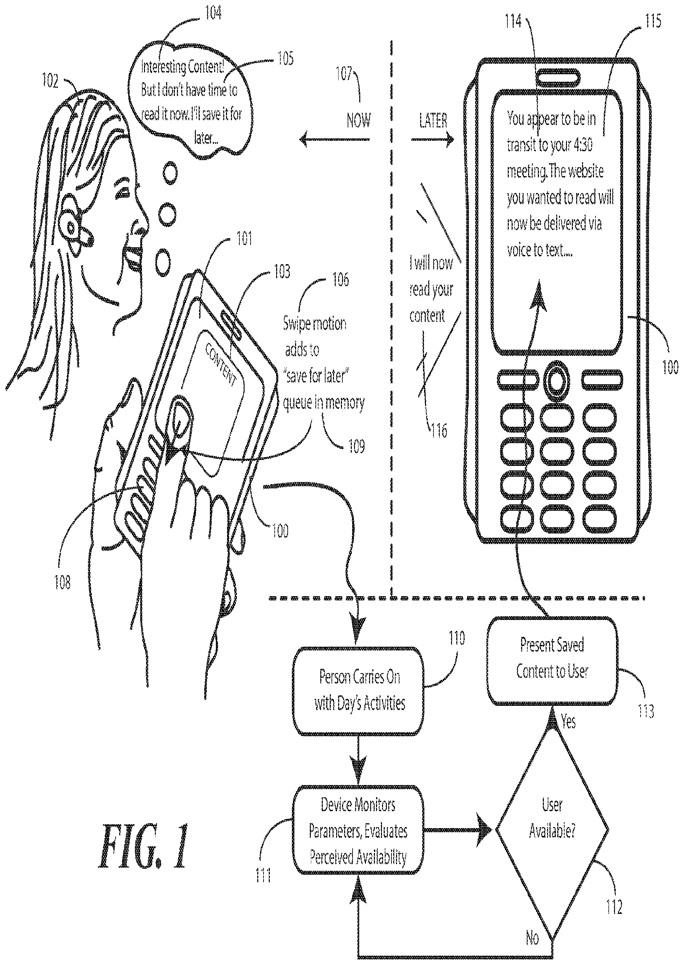

Turning now to FIG. 1, illustrated therein is a portable electronic device 100 having a user interface 101 and being configured in accordance with one or more embodiments of the invention. As shown in FIG. 1, a user 102 has found content 103 that she is interested 104 in reading or otherwise using or consuming. However, the user 102 does not have time 105 to use the content 103 at the time 107 of discovery. The content 103 can be any of an email, a photograph, a text message, a multimedia message, a website, a document, a Really Simple Syndication (RSS) feed, or other content that can be accessed on the portable electronic device 100. Note that the portable electronic device 100 is shown as being a smart phone for discussion purposes in this illustrative embodiment. However, it will be clear to those of ordinary skill in the art having the benefit of this disclosure that any number of other portable electronic devices can be substituted, such as media players, portable computers, tablets, wearable devices, palm-top computers, personal digital assistants, gaming devices, and so forth.

Since the user 102 is not able to immediately use the content 103, the user marks it, indicating that it is to be "consumed later" in accordance with one or more embodiments of the invention. The marking of the content 103 can occur in a variety of ways. In the illustrative embodiment of FIG. 1, the user 102 marks the content 103 by swiping 106 a finger or other object along the user interface 101, which in this embodiment is a touch-sensitive display. In other embodiments, the user 102 may employ other techniques to mark the content 103, such as by using a keypad 108, accessing a pull-down menu, actuating one or more soft keys, using voice commands, making alternate gestures along the user interface 101, and so forth.

When the user 102 marks the content 103, it is added 109 to a queue in memory. The actual data that is added to the queue can vary. In one embodiment, it can be the content 103 or a sub-portion of the content 103. In another embodiment, it can be a pointer to the content 103, such as a memory address, server address, uniform resource locator, and so forth. In yet another embodiment, the data added to the queue can be an identifier of the content 103 that enables one or more processors within the portable electronic device 100 to access or otherwise retrieve the content 103.

Now that the content 103 has been marked, the user 102 simply carries on 110 the activities of the day. While the user 102 is going about the day's activities, one or more modules and/or processors operating within the portable electronic device 100 monitors 111 parameters of the portable electronic device 100 to evaluate a perceived availability. This monitoring 111, in one embodiment, occurs as a function of a contextually aware application operating on the portable electronic device 100.

Illustrating by example, the modules and processors of the portable electronic device may monitor 111 the user's location through a GPS sensor, a location-triangulation application operable with base stations in a wide-area wireless network, a location determination application operable with one or more nodes in a local-area wireless network, and so forth. Further, the modules and processors may consult a calendaring application that is operable on the electronic device to determine where the user 102 is going. The modules and processors may detect from a microphone that the user 102 is not engaged in a conversation, be it on the telephone or in-person with another party. The modules and processors may further monitor a microphone or other acoustic detection circuit to determine whether another person, such as a friend of the user 102, is talking, as a person talking in relative proximity of the user 102 may indicate that the user 102 is not free. The modules and sensors may employ local-area wireless technology to detect the presence of recognized electronic devices that are proximately located with the portable electronic device 100. The rules for determining availability may be set in the factory, set by the user, or downloaded to the device from a third party.

From this and other monitored data, the modules and processors determine 112 whether an evaluative availability exists. Where the modules and processors determine 112 that the user 102 is available, the marked content 103 can be presented 113 to the user 102. The modules and processors effectively provide a "tell me later" function for the user 102. In one embodiment, to ensure that the user 102 is available, the modules and processors can present a notification 114 on the user interface indicating that the content 103 will be presented 113. In such a scenario, the user 102 may provide an affirmative user indication in response to the notification 114 being presented.

The presenting 113 of the content 103 can occur in a variety of ways. For example, in one simple embodiment, the content 103 can simply be presented on a display 115 of the portable electronic device 100. In another embodiment, the content 103 can be aurally delivered as spoken words 116 by way of a text-to-speech application operating on the portable electronic device 100.

Where more than one marked item exists in the queue, the selection of which content to present can be based, at least in part, on the monitored parameters. For example, in one embodiment the modules and processors may estimate how much time will be free during the evaluative availability state, such as by evaluating a perceived user destination and travel time. The modules and processors may then select marked content for presentation 113 by evaluating an amount of time necessary for the presentation 113. The modules and processors may select content that will require no more then the estimated amount of free time available to present.

The presentation 113 of the content 103 can be controlled so as not to be intrusive to the user 102. For example, in one embodiment the user availability detector of the portable electronic device 100 is configured for selective deactivation by a user. Accordingly, the user 102 can simply deactivate the "tell me later" application through the user interface 101, thereby preventing the subsequent presentation of marked content. In another embodiment, the modules and processors can continue to monitor 111 device parameters during the presentation 113 of content. Where, for example, the user 102 begins talking, either via the portable electronic device 100 or simply with another person in the room, the modules and parameters may detect the user's voice via a microphone or other acoustic sensor and pause the presentation of the content 103. Once the presentation of content is complete, the content 103 can be removed from the queue in memory.

As noted above, embodiments of the present invention can be configured for different applications. Where, for example, the content 103 includes an advertisement, it may be the case that the advertiser subsidized the original content through the payment of advertising fees. Accordingly, the advertiser may not want the advertisement to be deleted during delayed usage. Embodiments of the present invention contemplate such applications, and provide for them. Using advertising as an illustrative application, in one embodiment where the content 103 includes an advertisement, the advertisement can be played at the beginning of the presentation of the content 103, at the end of the presentation of the content 103, or partway through the presentation of the content 103. It is contemplated that advertisers may be partial to the latter scenario, as partially delivering the content 103 will whet the user's appetite for the concluding portion of the content 103. Accordingly, an advertisement can be played or otherwise presented partway through the presentation of the content 103 to ensure that it is heard or seen by the user 102.

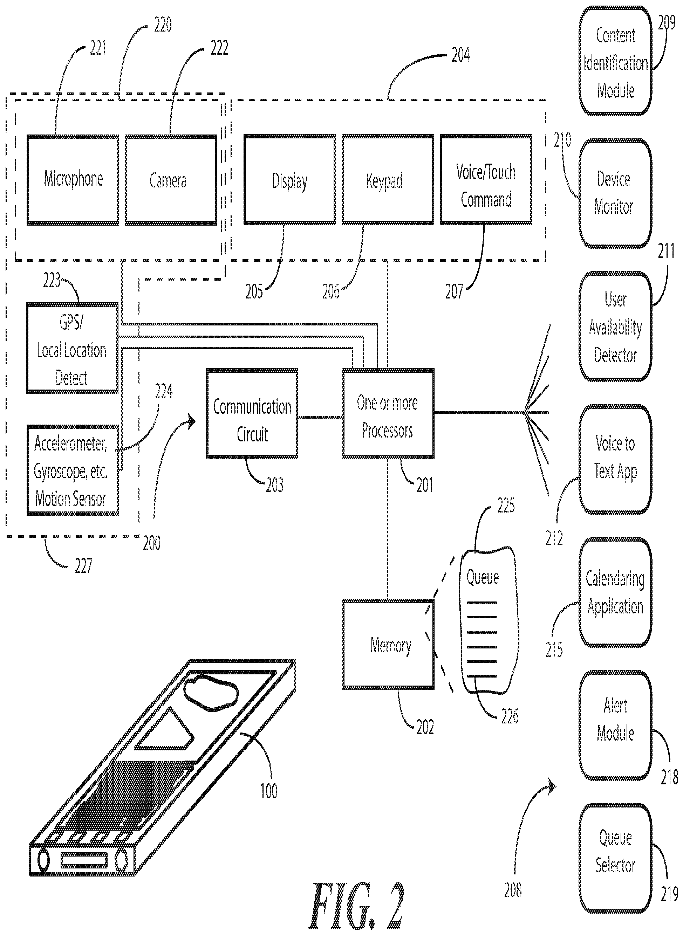

Turning now to FIG. 2, illustrated therein is a schematic block diagram 200 of one embodiment of a portable electronic device 100 configured in accordance with one or more embodiments of the invention. In one embodiment, the portable electronic device 100 comprises a wireless communication device, such as a mobile telephone. As noted above, while a mobile telephone is one type of portable electronic device 100 suitable for use with embodiments of the invention that will be used herein for discussion purposes, it will be clear to those of ordinary skill in the art having the benefit of this disclosure that the invention is not so limited. The "tell me later" methods described herein could equally be used in other communication devices, such as a camera phone, a smart phone, a personal digital assistant, a two-way radio, a gaming device, a laptop computer, or almost any portable electronic device having communication capabilities.

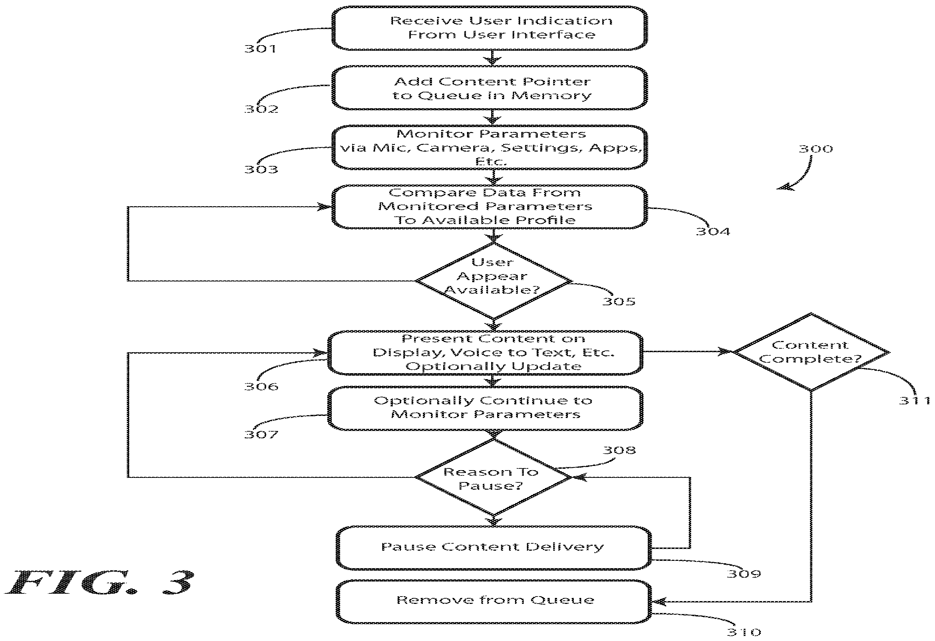

One or more processors 201 are operable within the portable electronic device 100. The one or more processors 201 are operable with various components of the device, including a memory 202 and a communication circuit 203. The one or more processors 201, which may be any of one or more microprocessors, programmable logic, application specific integrated circuit device, or other similar device, are capable of executing program instructions and methods - such as the method shown in FIG. 3 - which may be stored either in the one or more processors 201, or in the memory 202, or other computer readable media coupled to the one or more processors 201.

The one or more processors 201 are configured to operate the various functions of the portable electronic device 100, and also to execute software or firmware applications and modules that can be stored in a computer readable medium, such as memory 202. The one or more processors 201 execute this software or firmware, in part, to provide device functionality. The memory 202 may include either or both static and dynamic memory components, may be used for storing both embedded code and user data.

The communication circuit 203 is operable with the one or more processors 201, and is used to facilitate electronic communication with various networks to facilitate the retrieval of content 103. Note that it is possible to combine the one or more processors 201, the memory 202, and the communication circuit 203 into a single device or into devices having fewer parts while retaining the functionality of the constituent parts.

The communication circuit 203, which may be one of a receiver or transmitter, and may alternatively be a transceiver, operates in conjunction with the one or more processors 201 to electronically communicate through a communication network. In one embodiment, the communication circuit 203 is configured to communicate with one or more local or wide area networks. For example, the communication circuit 203 may be configured to both communicate through a local Wi-Fi network, a traditional cellular network, or combinations thereof. Examples of wide-area networks include Code Division Multiple Access (CDMA) networks or Global System for Mobile communication (GSM) networks. Other examples of networks with which the communication circuit 203 may communicate include Push-to-Talk (PTT) networks, proprietary networks, direct communication networks, and local-area IEEE 802.11 networks. In one embodiment the communication circuit 203 is configured to receive GPS location data, such as through GPS satellites.

A user interface 204 is operable with the one or more processors 201 to deliver information to, and receive information from, a user. The user interface 204 can include a display 205, which may include a touch-sensitive surface. The user interface 204 can further include a keypad 206 and audible communication devices 207 such as near-to-ear speakers and loudspeakers. It is well to note that these various components can be integrated together. For example, the display 205 can be configured as a touch-sensitive display, thereby combining features of the keypad 206 and display 205 together.

One or more device monitors 227 are included in one embodiment. The illustrative but non-limiting device monitors 227 shown in FIG. 2 include environmental monitoring devices 220 and location determination devices 223. In one embodiment, the device monitors 227 include monitors of on-board applications that are operable with the one or more processors 201 as well. These monitors of on-board applications are configured, in one embodiment, to be able to access and retrieve data and other information entered into the on-board applications. For example, the monitors of on-board applications can be configured to retrieve appointments and other events from a calendaring application 215 to determine where the user (102) may be or may be headed.

The environmental monitoring devices 220 can be included for performing some of the monitoring (111) functions described above in the discussion of FIG. 1. For example, a microphone 221 or other acoustic sensing device can be included to monitor ambient noise and perform voice identification functions. Additionally, a camera 222 can be included to monitor ambient lighting conditions and other visibly detectable data.

In one embodiment, location-determination devices 223, such as a GPS sensor or land-based location determination component are included. For example, embodiments of the present invention may be configured to determine a location of the portable electronic device 100, and thus an evaluative location of the user (102), by receiving location information from GPS satellites through the location-determination devices 223. While the use of location-determination devices such as GPS sensors is one way for determining location, others may be used as well. For instance, devices determining location from wireless nodes within a communication proximity can be used instead of a GPS sensor. Additionally, devices determining location by triangulation procedures using a plurality of communication nodes can be used as well. While location can be one of the parameters monitored, it is an optional one. Accordingly, some embodiments of the invention will not use location-determination devices 223 at all.

The one or more processors 201 are, in one embodiment, configured to be operable with one or more modules 208. These modules 208 can be configured as sets of instructions stored in the memory 202 that are usable by the one or more processors 201 to execute a method to provide the "tell me later" features or delayed presentation of content 103 as described herein. Alternatively, the modules 208 could be configured in hardware, such as through programmable logic. The modules 208 shown in FIG. 2 are illustrative only. Embodiments of the present invention may use various combinations of modules 208, including subsets of the modules 208 shown in FIG. 2. Further, other modules may be added to further increase device functionality.

A content identification manager 209 is configured to receive a user indication of content 103 to be presented at a future time. Recall from FIG. 1 that a user (102) can mark content 103, perhaps with a finger gesture or actuation of a pull-down menu. When this occurs, the content identification manger 209 is configured to detect this marking action and to store an identifier 226 corresponding to the content 103 in a queue 225 in the memory 202 or other computer readable medium. As noted above, the identifier 226 can be a pointer to the content 103, the content 103 itself, a sub-portion of the content 103, a memory register identifier where the content 103 is stored, a network location where the content 103 can be retrieved, a uniform resource locator, or other identifier.

One or more device monitors 210 are configured to monitor device parameters with the one or more device monitors 227. The device parameters can be any of a wide variety of data, and can provide information relating to environmental surroundings or operational states of the portable electronic device 100. By way of example, the device monitors 227 can include one or more of a camera 222, a microphone 221, a location detector 223, a calendaring application 215, an accelerometer 224, a touch input such as a keypad 206 or touch-sensitive display, user preferences stored in the memory, and combinations thereof. The device parameters can be one or more of device settings, device application settings, device location, proximity information relating to known or identified devices within relative proximity of the portable electronic device 100, device environmental information received from interface components of the portable electronic device 100, and combinations thereof. The device parameters can also be voice input from the user (102), such as that received through the microphone 221, or the voice input of others.

A user availability detector 211 is configured to determine a user availability event from the monitored parameters. One embodiment of this was described above where the user availability detector 211 may determine that a person is on a train en route to a meeting based upon the device parameters of an absence of the users voice, an elevated ambient noise, a change in position of the user, and a detected upcoming event retrieved from a calendaring application 215. Other techniques can be used as well. For example, in one embodiment, the user availability detector 211 is configured to evaluate the device parameters by comparing the parameters with a user availability model stored in the memory 202. The user availability model may include thresholds of various device parameters that, when met in combination, predict that the user (102) is available. The user availability model may be pre-programmed and may be based upon a composite model of device conditions that commonly occur when a device user is available. Alternatively, the user availability model may be either constructed or modified based upon data received during usage of the portable electronic device 100 and/or device data snapshots taken when the later presentation of content 103 was successful.

Once the user availability detector 211 detects a user availability event, an optional queue selector 219 can select content based upon the device parameters. One example of strategic selection, that of presenting content that can be presented within an evaluated travel time, was presented above. Other prioritization schemes will be obvious to those of ordinary skill in the art having the benefit of this disclosure.

The one or more processors 201 are then configured to present the content 103 on the user interface 204. As noted above, this can occur in a variety of ways. In one embodiment, the one or more processors 201 are configured to present the data on a display 205 of the portable electronic device 100. In another embodiment, the one or more processors 201 are configured to audibly present the content 103 via text-to-speech module 212 by causing the text-to-speech module 212 to read the content 103.

An optional alert module 218 can be configured to present a notification (114) on the user interface 204 that the content 103 will be presented. The alert module 218 thereby works to prevent unintended or unnecessary presentations of the content 103. Further, where the evaluative user availability event is not an actual time of user availability, the inclusion of an alert module 218 permits the user (102) to decline the presentation of the content 103. In one embodiment where an alert module 218 is used, the one or more processors 201 are configured to present the content 103 only upon receipt of an affirmative user indication in response to the presenting the notification.

Turning now to FIG. 3, illustrated therein is a method 300 for providing a delayed usage of content suitable for use in a portable electronic device (100) in accordance with embodiments of the invention. The method steps of FIG. 3 can be configured as executable instructions suitable for storage in a memory (202) or other computer readable medium for use by one or more processors (201) in a portable electronic device (100). Alternatively, the steps can be configured in hardware as programmable logic.

At step 301, the method 300 receives a user indication from a user interface (204). The user indication identifies content (103) to be consumed at a later time. As noted above, the user indication can be a finger gesture on a touch sensitive surface, actuation of a pull down menu, or other affirmative action from a user (102). The content (103) can be any of an electronic mail communication, a text message communication, a multimedia message communication, a website, a news feed, or other type of information accessible by the portable electronic device (100). Upon receiving the user indication, an identifier (226) of the content (103) is added to a queue (225) in memory (202) at step 302.

At step 303, the method 300 monitors one or more device parameters to determine an evaluative user availability state. In one embodiment, the method 300 accomplishes this by comparing the one or more device parameters with a predetermined device condition corresponding at step 304 to an evaluative user availability state. The predetermined device condition can be based upon a variety of data conditions. For example, in one embodiment the predetermined device condition comprises at least an absence of voice input. The voice input can be the user's voice or that of another person. In another embodiment, the monitored device parameters can comprise a change in device location. Accordingly, the predetermined device condition can include a location change occurring in excess of a predetermined rate threshold, as such a change can be indicative of travel.

Where the user appears to be available, as determined at decision 305, the marked content can be presented to the user (102) at step 306. This step 306 can include retrieving a content update prior to presenting the content (103). For instance, if the content (103) were a news feed, the method 300 can be configured to retrieve news updates prior to presenting the content (103). This step 305 can also include selecting an indicator from the queue based upon the one or more device parameters, such as evaluating a travel time to a destination based upon an event from a calendaring application and a change in device location and selecting an indicator from the queue when a predicted presentation length of the content item is less then or equal to the expected travel time to allow the entire content to be presented. The marked content can be presented visually, audibly, or combinations thereof as previously described.

At step 307, the method 300 can continue to monitor device parameters while the content presentation is ongoing. This step 307 can be used to determine whether there are reasons to pause the presentation of content. Illustrating by example, in one embodiment the method 300 may continue to monitor for the voice input of the user (102) or another party after the presenting the content (103) commences at step 307. Where the user (102) starts talking, for example, a decision to pause the presentation can be made at decision 308. Accordingly, the presentation can be paused at step 309. Once the presentation of content (103) is complete, as determined at decision 311, the content identifier can be removed from the queue (225) at step 310. If the presentation is paused then the content pointer should be updated to reflect the content already presented so that the remainder of the content can be consumed at a later time.

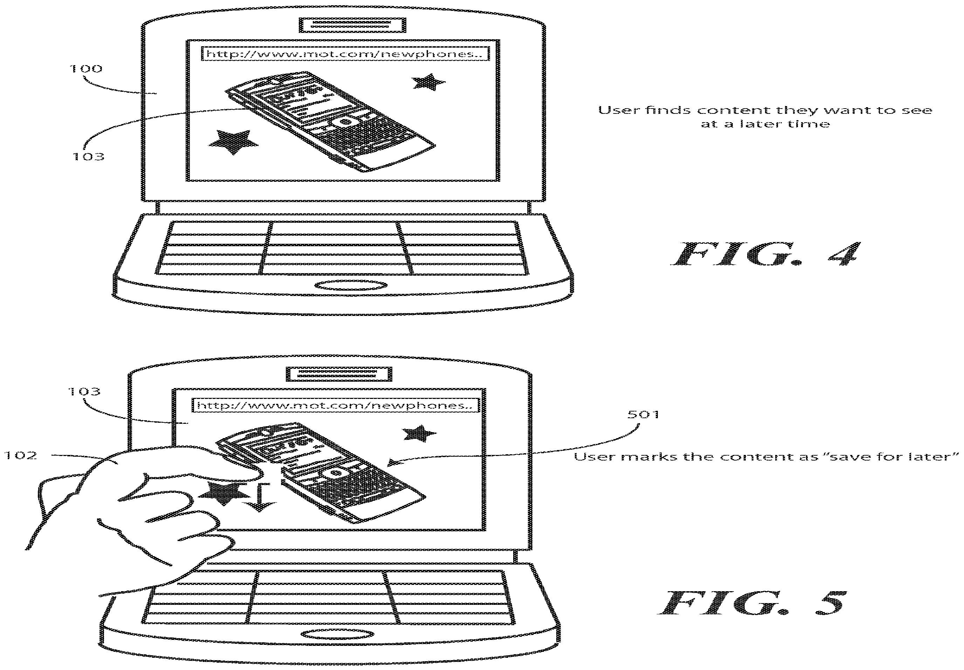

Turning now to FIGS. 4-9, illustrated therein is one exemplary use case depicting a portable electronic device 100 in action when configured in accordance with one or more embodiments of the invention. Beginning with FIG. 4, a user has found content 103 that they wish to use at a later time. The illustrative content 103 of FIG. 4 is a website showing new technology offerings.

Turning to FIG. 5, since the user 102 is not able to use the content 103 at the present time, the user 102 marks the content 103 for later use. Note that the marked content can be the entire content 103 or a sub-portion thereof. For example, in the illustrative embodiment of FIG. 5, the marked content may only be the picture 501 of a new device.

Turning now to FIG. 6, the portable electronic device 100 monitors one or more device parameters to determine when the user (102) may be available. As described above, the portable electronic device 100 may monitor acoustic information 601 received from a microphone 221 or other acoustic sensor. The portable electronic device 100 may monitor visual information 602 received through a camera 222 or other module. The portable electronic device 100 may monitor location or movement information received from navigational satellites 603, network nodes 604, or navigational servers 605.

Turning to FIG. 7, the portable electronic device 100 determines when the user (102) may be available from the monitored device parameters. In one embodiment, this can include retrieving 701 a user availability profile from memory and comparing 702 it to the monitored device parameters.

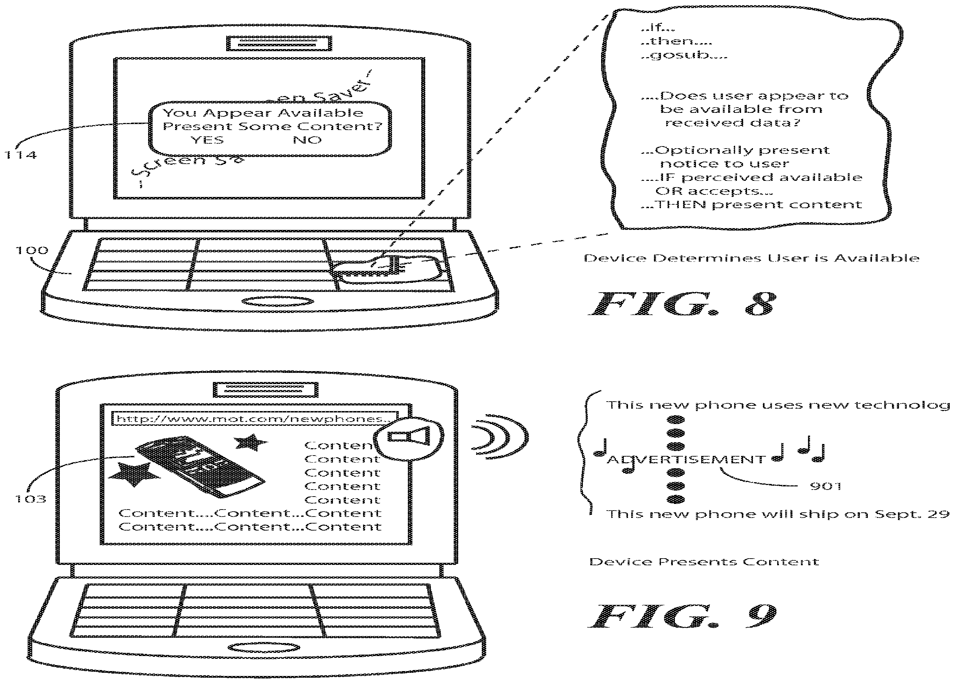

Turning to FIG. 8, when the portable electronic device 100 determines that the user (102) may be available, the marked content can be presented to the user (102). In one embodiment, an optional notification 114 can be presented to ensure that the user (102) is indeed available. Where the user (102) provides an affirmative acceptance in response to the notification, the content 103 can be presented as shown in FIG. 9. The presentation can include visible presentation, audible presentation, or combinations thereof. As set forth above, where the content 103 includes an advertisement 901, the advertisement 901 can be presented partway through the presentation of the content 103.

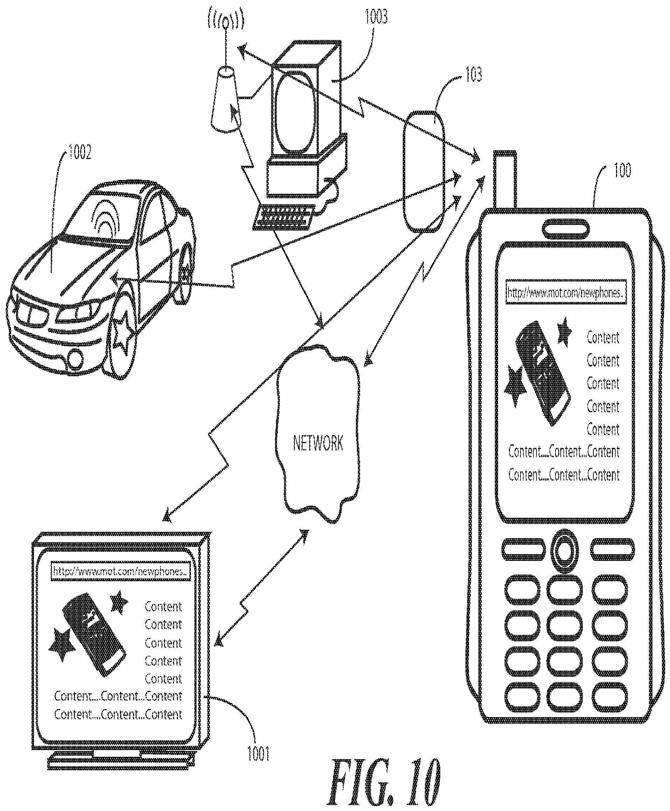

To this point, the presentation of content has occurred on the portable electronic device. However, embodiments of the invention contemplate that the portable electronic device can be in communication with other electronic devices, either directly or across a network. Accordingly, in one embodiment of the invention, the presentation of content can occur on a different device. Such a scenario is shown in FIG. 10.

Turning now to FIG. 10, the portable electronic device 100 has determined that the user is available and is thus ready to present stored content. However, the portable electronic device 100 is in communication with one or more other devices. For illustration, the one or more other devices shown in FIG. 10 include a television 1001, an automobile 1002, and a computer 1003. Note that the portable electronic device need not be in communication with each device simultaneously, and that FIG. 10 is illustrative of only a few of the possible devices suitable for the presentation of marked content. Others will be readily apparent to those of ordinary skill in the art having the benefit of this disclosure.

As other devices are in communication with the portable electronic device 100, the portable electronic device 100 may make a determination that the content would be more suitably presented on another device. Accordingly, the portable electronic device 100 can be configured to deliver the content 103 to another device. In the illustrative embodiment of FIG. 10, the content 103 may be presented on the television 1001, read on the radio of the automobile 1002, or presented on the computer 1003 in addition to, or instead of, presenting the content 103 on the portable electronic device 100 itself.

As described herein, embodiments of the invention provide a portable electronic device capable of delivering content to the user, where the user identifies content for later delivery, and at a later time the device determines the user is available and delivers the content. In one embodiment, a content identifier is stored in a queue, and the content is removed from the queue after delivery. In one embodiment, the portable electronic device evaluatively knows the user's location, destination, and the estimated time of travel. Accordingly, a content item can be chosen for delivery that can be completed in the estimated time of travel. In one embodiment, where the portable electronic device hears - by way of a microphone or other acoustic sensor - the user's voice, the content can be delayed for another time or can be paused. In one embodiment, the portable electronic device can monitor other recognized devices traveling with the user, and can refrain from delivering content if the user is traveling with other known people.

In the foregoing specification, specific embodiments of the present invention have been described. However, one of ordinary skill in the art appreciates that various modifications and changes can be made without departing from the scope of the present invention as set forth in the claims below. Thus, while preferred embodiments of the invention have been illustrated and described, it is clear that the invention is not so limited.

## Claims

1. A method comprising:
receiving, by a portable electronic device (100), content from a server, wherein the content (103) comprises one or more of an electronic mail communication, a photograph, a text message communication, a multimedia message communication, a website, a document, an RSS feed, or a news feed;
presenting, by the portable electronic device (100), at least a portion of the content;
receiving (301), by one or more processors (201) of the portable electronic device (100), from a user interface (204), an indication that the content (103) is to be presented again at a later time;
monitoring (303), by the one or more processors (201), one or more device parameters of the portable electronic device (100); and
responsive to determining, by the one or more processors (201), based at least in part on the one or more device parameters, that the user of the portable electronic device (100) appears to be available (305), presenting (306) the content (103) again.

2. The method of claim 1, wherein the one or more device parameters comprise one or more of a device setting, a device application setting, a device location, proximity information relating to a known device, device environmental information received from interface components of the portable electronic device, and combinations thereof.

3. The method of claim 1, wherein:
monitoring one or more device parameters comprises comparing the one or more device parameters with a predetermined device condition stored in a memory,
at least one of the one or more device parameters comprises voice input from a user,
the predetermined device condition comprises at least an absence of voice input.

4. The method of claim 3, further comprising:
continuing to monitor for the voice input after presenting the content again; and
pausing presenting the content again when the voice input is detected.

5. The method of claim 1, wherein:
at least one of the one or more device parameters comprises a change in device location, and
monitoring one or more device parameters comprises determining that the change in device location exceeds a predetermined threshold.

6. The method of claim 1, wherein the one or more device parameters comprises an event associated with a calendaring application and a change in device location, further comprising:
responsive to receiving the indication that the content is to be presented again at a later time, storing a content indicator associated with the content in a queue (225) in a memory (202);
determining, based at least in part on the event associated with the calendaring application and the change in the device location, an estimated travel time to a destination; and
selecting the content indicator from the queue when a content length associated with the content is such that a presentation time of the content will be less than or equal to the estimated travel time.

7. The method of claim 1, further comprising:
responsive to receiving the indication that the content is to be presented again at a later time, storing a content indicator associated with the content in a queue (225) in a memory (202); and
removing the content indicator from the queue (225) in response to presenting the content again.

8. The method of claim 1, presenting the content again comprises:
responsive to determining, based at least in part on the one or more device parameters, that the user of the portable electronic device appears to be available, presenting a notification on the user interface (204) that the content will be presented again; and
responsive to receiving an indication of a user input indicating an affirmative response to the notification, presenting the content again.

9. A portable electronic device (100) comprising:
one or more processors (201);
a communication circuit (203) configured to retrieve content (103) from a server, wherein the content (103) comprises one or more of an electronic mail communication, a photograph, a text message communication, a multimedia message communication, a website, a document, an RSS feed, or a news feed;
a user interface (204) controllable by the one or more processors (201) to present at least a portion of the content;
a content identification manager (209) operable by the one or more processors (201) to receive an indication from the user interface (204) that the content is to be presented at a later time and to store a content identifier associated with the content in a queue (225) in a memory (202);
one or more device monitors (227) operable by the one or more processors (201) to monitor device parameters; and
a user availability detector (211) operable by the one or more processors (201) to evaluate monitored device parameters to determine that a user of the portable electronic device (100) appears to be available;
wherein the one or more processors (201) are configured to present the content again using the user interface (204) responsive to the user availability detector (211) determining that the user appears to be available.

10. The portable electronic device of claim 9, wherein the one or more device monitors (227) comprise one or more of a camera, a microphone, a location detector, a calendaring application, an accelerometer, a touch input, or user preferences stored in the memory (202).

11. The portable electronic device of claim 9, wherein the user availability detector (211) is configured for selective deactivation responsive to receiving an indication of a user input.

12. The portable electronic device of claim 9, further comprising a text to speech module operable by the one or more processors (201) to present the content audibly.

13. The portable electronic device of claim 9, further comprising a queue selector (219) operable by the one or more processors (201) to select, based at least in part on the one or more device parameters, a stored content identifier from the queue (225) for presentation.

## Patentansprüche

1. Verfahren, umfassend:
das Empfangen von Inhalt von einem Server durch ein tragbares elektronisches Gerät (100), wobei der Inhalt (103) ein oder mehrere elektronische Mailkommunikationen, Fotos, Textnachrichtenkommunikationen, Multimedia-Nachrichtenkommunikationen, Websites, Dokumente, RSS-Feeds oder Newsfeeds umfasst;
das Darstellen von mindestens einem Teil des Inhalts durch das tragbare elektronische Gerät (100);
das Empfangen (301) einer Angabe, dass der Inhalt (103) zu einem späteren Zeitpunkt erneut dargestellt werden soll, durch einen oder mehrere Prozessoren (201) des tragbaren elektronischen Geräts (100) von einer Benutzeroberfläche (204);
das Überwachen (303) von einem oder mehreren Geräteparametern des tragbaren elektronischen Geräts (100) durch den einen oder die mehreren Prozessoren (201); und
als Reaktion auf das Ermitteln durch den einen oder die mehreren Prozessoren (201), zumindest teilweise auf Basis des einen oder der mehreren Geräteparameter, dass der Benutzer des tragbaren elektronischen Geräts (100) verfügbar zu sein scheint (305), das erneute Darstellen (306) des Inhalts (103).

2. Verfahren nach Anspruch 1, wobei der eine oder die mehreren Geräteparameter ein oder mehrere Geräteeinstellungen, Geräteanwendungseinstellungen, Geräteorte, Näheinformationen in Bezug auf ein bekanntes Gerät, Geräteumgebungsinformationen, die von Schnittstellenkomponenten des tragbaren elektronischen Geräts empfangen wurden, oder Kombinationen davon umfassen.

3. Verfahren nach Anspruch 1, wobei:
das Überwachen des einen oder der mehreren Geräteparameter das Vergleichen des einen oder der mehreren Geräteparameter mit einer vorher bestimmten Gerätebedingung umfasst, die in einem Speicher gespeichert ist,
mindestens einer der ein oder mehreren Geräteparameter Spracheingabe von einem Benutzer umfasst,
die vorher bestimmte Gerätebedingung mindestens eine Abwesenheit der Spracheingabe umfasst.

4. Verfahren nach Anspruch 3, des Weiteren umfassend:
das Fortsetzen der Überwachung auf Spracheingabe nach erneuter Darstellung des Inhalts; und
das erneute Anhalten des Inhalts, wenn die Spracheingabe erkannt wird.

5. Verfahren nach Anspruch 1, wobei:
mindestens einer der ein oder mehreren Geräteparameter eine Änderung beim Geräteort umfasst, und
das Überwachen des einen oder der mehreren Geräteparameter die Ermittlung umfasst, dass das Ändern beim Geräteort einen vorher bestimmten Schwellenwert überschreitet.

6. Verfahren nach Anspruch 1, wobei der eine oder die mehreren Geräteparameter ein Ereignis umfassen, das mit einer Kalenderanwendung und einem Ändern beim Geräteort verbunden sind, des Weiteren umfassend:
als Reaktion auf das Angeben, dass der Inhalt zu einem späteren Zeitpunkt erneut dargestellt werden soll, das Speichern eines Inhaltsindikators, der mit dem Inhalt in einer Warteschlange (225) in einem Speicher (202) verbunden ist;
das Ermitteln, zumindest teilweise auf Basis des Ereignisses, das mit der Kalenderanwendung und dem Ändern beim Geräteort verbunden ist, einer geschätzten Fahrtzeit zu einem Ziel; und
das Auswählen eines Inhaltsindikators aus der Warteschlange, wenn eine Inhaltslänge, die mit dem Inhalt verbunden ist, so ist, dass die Darstellungszeit des Inhalts kleiner oder gleich der geschätzten Fahrtzeit ist.

7. Verfahren nach Anspruch 1, des Weiteren umfassend:
als Reaktion auf das Angeben, dass der Inhalt zu einem späteren Zeitpunkt erneut dargestellt werden soll, das Speichern eines Inhaltsindikators, der mit dem Inhalt in einer Warteschlange (225) in einem Speicher (202) verbunden ist; und
das Entfernen des Inhaltsindikators aus der Warteschlange (225) als Reaktion auf die erneute Darstellung des Inhalts.

8. Verfahren nach Anspruch 1, wobei das erneute Darstellen des Inhalts Folgendes umfasst:
als Reaktion auf das Ermitteln, zumindest teilweise auf Basis des einen oder der mehreren Geräteparameter, dass der Benutzer des tragbaren elektronischen Geräts verfügbar zu sein scheint, das Darstellen einer Benachrichtigung auf der Benutzeroberfläche (204), dass der Inhalt erneut dargestellt wird; und
als Reaktion auf das Empfangen einer Angabe einer Benutzereingabe, die eine positive Antwort auf die Benachrichtigung angibt, das erneute Darstellen des Inhalts.

9. Tragbares elektronisches Gerät (100) umfassend:
einen oder mehrere Prozessoren (201);
eine Kommunikationsschaltung (203), die so konfiguriert ist, dass sie Inhalt (103) von einem Server empfängt, wobei der Inhalt (103) ein oder mehrere elektronische Mailkommunikationen, Fotos, Textnachrichtenkommunikationen, Multimedia-Nachrichtenkommunikationen, Websites, Dokumente, RSS-Feeds oder Newsfeeds umfasst;
eine Benutzeroberfläche (204), die von dem einen oder den mehreren Prozessoren (201) gesteuert werden kann, um mindestens einen Teil des Inhalts darzustellen;
einen Inhaltsidentifizierungsmanager (209), der von dem einen oder den mehreren Prozessoren (201) verwendet werden kann, um eine Angabe von der Benutzeroberfläche (204) zu empfangen, dass der Inhalt zu einem späteren Zeitpunkt dargestellt werden soll, und um eine Inhaltskennung, die mit dem Inhalt in einer Warteschlange (225) verbunden ist, in einem Speicher (202) zu speichern;
einen oder mehrere Gerätemonitore (227), die durch den einen oder die mehreren Prozessoren (201) verwendet werden können, um Geräteparameter zu überwachen; und
einen Benutzerverfügbarkeitsmelder (211), der von dem einen oder den mehreren Prozessoren (201) verwendet werden kann, um die überwachten Geräteparameter zu beurteilen, um zu ermitteln, ob der Benutzer des tragbaren elektronischen Geräts (100) verfügbar zu sein scheint;
wobei der eine oder die mehreren Prozessoren (201) so konfiguriert sind, dass sie den Inhalt als Reaktion darauf, dass der Benutzerverfügbarkeitsmelder (211) ermittelt, dass der Benutzer verfügbar zu sein scheint, mithilfe der Benutzeroberfläche (204) erneut darstellen.

10. Tragbares elektronisches Gerät nach Anspruch 9, wobei der eine oder die mehreren Gerätemonitore (227) ein oder mehrere Kameras, Mikrofone, Ortsmelder, Kalenderanwendungen, Beschleunigungsmesser, Touch-Eingaben oder Benutzervoreinstellungen umfassen, die im Speicher (202) gespeichert sind.

11. Tragbares elektronisches Gerät nach Anspruch 9, wobei der Benutzerverfügbarkeitsmelder (211) für die selektive Deaktivierung als Reaktion auf das Empfangen einer Angabe einer Benutzereingabe konfiguriert ist.

12. Tragbares elektronisches Gerät nach Anspruch 9, des Weiteren umfassend ein Textzu-Sprache-Modul, das von dem einen oder den mehreren Prozessoren (201) verwendet werden kann, um den Inhalt akustisch wiederzugeben.

13. Tragbares elektronisches Gerät nach Anspruch 9, des Weiteren umfassend einen Warteschlangenselektor (219), der von dem einen oder den mehreren Prozessoren (201) verwendet werden kann, um, zumindest teilweise auf Basis des einen oder der mehreren Geräteparameter, eine gespeicherte Inhaltskennung aus der Warteschlange (225) zur Darstellung auszuwählen.

## Revendications

1. Système comprenant :
la réception, par un dispositif électronique portable (100), d'un contenu à partir d'un serveur, où le contenu (103) comprend une ou plusieurs communications de courrier électronique, une photographie, la communication d'un message de texte, la communication d'un message multimédia, un site internet, un document, un flux RSS, ou un fil d'actualités ;
la présentation, par le dispositif électronique portable (100), d'au moins une partie du contenu ;
la réception (301), par un ou plusieurs processeurs (201) du dispositif électronique portable (100), à partir d'une interface d'utilisateur (204), d'une indication que le contenu (103) doit être de nouveau présenté à un moment ultérieur ;
la surveillance (303), par le ou les processeurs (201), d'un ou de plusieurs paramètres de dispositif du dispositif électronique portable (100) ; et
en réponse à la détermination, par le ou les processeurs (201), sur la base au moins en partie d'un ou de plusieurs paramètres de dispositif, que l'utilisateur du dispositif électronique portable (100) semble disponible (305), une nouvelle présentation (306) du contenu (103).

2. Procédé selon la revendication 1, dans lequel le ou les paramètres de dispositif comprennent un ou plusieurs paramètres parmi un réglage de dispositif, un réglage d'une application de dispositif, une localisation de dispositif, une information de proximité concernant un dispositif connu, une information environnementale relative au dispositif reçue à partir de composants d'interface du dispositif électronique portable, et des combinaisons de ceux-ci.

3. Procédé selon la revendication 1, dans lequel :
la surveillance d'un ou de plusieurs paramètres de dispositif comprend la comparaison du paramètre ou des paramètres de dispositif avec un état de dispositif prédéterminé stocké dans une mémoire,
au moins l'un du ou des paramètres de dispositif comprend une entrée vocale provenant d'un utilisateur,
l'état de dispositif prédéterminé comprend au moins une absence d'entrée vocale.

4. Procédé selon la revendication 3, comprenant en outre :
la poursuite de la surveillance de l'entrée vocale après la nouvelle présentation du contenu ; et une pause de la nouvelle présentation du contenu lorsque l'entrée vocale est détectée.

5. Procédé selon la revendication 1, dans lequel :
au moins un parmi l'un ou les paramètres de dispositif comprend un changement dans la localisation de dispositif, et
la surveillance d'un ou de plusieurs paramètres de dispositif comprend la détermination que le changement dans la localisation de dispositif excède une limite prédéterminée.

6. Procédé selon la revendication 1, dans lequel le ou les paramètres de dispositif comprend (comprennent) un évènement associé avec une application d'enregistrement et un changement dans la localisation de dispositif, comprenant en outre :
en réponse à la réception de l'indication que le contenu doit être de nouveau présenté à un moment ultérieur, le stockage d'un indicateur de contenu associé avec le contenu dans une file (225) dans une mémoire (202) ;
la détermination, sur la base au moins en partie de l'évènement associé avec l'application d'enregistrement et le changement dans la localisation de dispositif, d'une durée de voyage estimée vers une destination ; et
le choix de l'indicateur de contenu à partir de la file lorsqu'une longueur de contenu associée avec le contenu est telle qu'un moment de présentation du contenu sera inférieur ou égal à la durée de voyage estimée.

7. Procédé selon la revendication 1, comprenant en outre :
en réponse à la réception de l'indication que le contenu doit être présenté de nouveau à un moment ultérieur, le stockage d'un indicateur de contenu associé avec le contenu dans une file (225) dans une mémoire (202) ; et
le retrait de l'indicateur de contenu à partir de la file (225) en réponse à la nouvelle présentation du contenu.

8. Procédé selon la revendication 1, la nouvelle présentation du contenu comprend :
en réponse à la détermination, sur la base au moins en partie que le ou les paramètres de dispositif, que l'utilisateur du dispositif électronique portable semble être disponible, la présentation d'une notification sur l'interface (204) d'utilisateur que le contenu sera de nouveau présenté ; et
en réponse à la réception d'une indication d'une entrée d'utilisateur indiquant une réponse affirmative à la notification, la nouvelle présentation du contenu.

9. Dispositif électronique portable (100), comprenant :
un ou plusieurs processeurs (201) ;
un circuit de communication (203) configuré pour retrouver un contenu (103) à partir d'un serveur, où le contenu (103) comprend une ou plusieurs communications de courrier électronique, une photographie, la communication d'un message de texte, la communication d'un message multimédia, un site internet, un document, un flux RSS, ou un fil d'actualités ;
une interface d'utilisateur (204) contrôlable par le ou les processeurs (201) pour présenter au moins une partie du contenu ;
un gestionnaire d'identification de contenu (209) pouvant être mis en fonction par le ou les processeurs (201) pour recevoir une indication à partir de l'interface d'utilisateur (204) que le contenu doit être présenté à un moment ultérieur et pour stocker un identifieur de contenu associé avec le contenu dans une file (225) dans une mémoire (202) ;
un ou plusieurs moniteurs (227) de dispositif pouvant être mis en fonction par le ou les processeurs (201) pour surveiller les paramètres de dispositif ; et
un détecteur de disponibilité (211) d'utilisateur pouvant être mis en fonction par le ou les processeurs (201) pour évaluer les paramètres de dispositif surveillés afin de déterminer qu'un utilisateur du dispositif électronique portable (100) semble être disponible ;
où le ou les processeurs (201) sont configurés pour présenter de nouveau le contenu en utilisant l'interface d'utilisateur (204) en réponse au détecteur de disponibilité (211) de l'utilisateur déterminant que l'utilisateur semble être disponible.

10. Dispositif électronique portable selon la revendication 9, dans lequel un ou plusieurs moniteurs de dispositif (227) comprennent un ou plusieurs des objets parmi une caméra, un microphone, un détecteur de localisation, une application d'enregistrement, un accéléromètre, une entrée tactile, ou des préférences d'utilisateur stockées dans la mémoire (202).

11. Dispositif électronique portable selon la revendication 9, dans lequel le détecteur de disponibilité (211) d'utilisateur est configuré pour une désactivation sélective en réponse à la réception d'une indication d'entrée d'utilisateur.

12. Dispositif électronique portable selon la revendication 9, comprenant en outre un texte pour un module vocal pouvant être mis en fonction par le ou les processeurs (201) pour présenter le contenu de manière audible.

13. Dispositif électronique portable selon la revendication 9, comprenant en outre un sélecteur de file (219) pouvant être mis en fonction par le ou les processeurs (201) pour choisir, sur la base au moins en partie d'un ou de plusieurs paramètres de dispositif, un identifieur de contenu stocké à partir de la file (225) pour la présentation.
